# EUROPÄISCHE PATENTSCHRIFT

(11) **EP 0 859 063 B1**
(45) Veröffentlichungstag und Bekanntmachung des Hinweises auf die Patenterteilung: **09.05.2001**
(21) Anmeldenummer: 98102498.7
(22) Anmeldetag: 13.02.1998
(51) Int. Cl.: C21C 5/36, C22B 34/12

(54) **Verwendung einer Titandioxid enthaltenden Mischung als Zuschlagstoff zu einer metallurgischen Schmelze**
Use of a mixture comprising titaniumdioxide as an additive to a metallurgical melt
Utilisation d'un mélange contenant du dioxyde de titane comme additif pour un bain de métal liquide

(30) Priorität: 17.02.1997 DE 19705996
(43) Veröffentlichungstag der Anmeldung: 19.08.1998
(73) Patentinhaber: Sachtleben Chemie GmbH, 47198 Duisburg (DE)
(72) Erfinder: Amirzadeh, Djamschid, Dr., 47445 Moers (DE); Trippe, Dieter, 47441 Moers (DE)
(74) Vertreter: Uppena, Franz, Dr.

(56) Entgegenhaltungen:
- EP-A- 0 686 700
- DE-C- 4 304 724
- DE-C- 4 318 126
- US-A- 2 135 466

## Beschreibung

Die Erfindung betrifft eine Verwendung einer 5 bis 90 Gew.%, vorzugsweise 10 bis 50 Gew.%, Titandioxid enthaltenden Mischung als Zusatz für metallurgische Schmelzen, vorzugsweise für Schmelzen von Eisenwerkstoffen.

Bekanntlich werden bei der schmelzmetallurgischen Herstellung metallischer Werkstoffe in die benutzten Schmelzöfen größere Mengen an natürlichem Ilmenit, üblicherweise mit einer Körnung von ca. 50 mm, als Titanträger eingebracht. Durch den Zusatz von Ilmenit werden der im Roheisen in Form von Titannitrit und Titancarbonitrit vorhandene Stickstoff gebunden und auf diese Weise die Schmelze entstickt. Die gebildeten Titanverbindungen lagern sich wenigstens teilweise an der Feuerfestausmauerung der Schmelzöfen ab, so daß deren Haltbarkeit beachtlich erhöht wird.

Ilmenit mit 20 bis über 60 Gew.% Titandioxid tritt massiv oder als Sand auf. Seine Gewinnung erfordert einen großen technischen Aufwand; denn im allgemeinen ist eine Anreicherung durch entsprechend geeignete Aufbereitungsverfahren erforderlich.

Zur Senkung dieses Aufwands ist deshalb in der DE-C-4 304 724 als Ersatz für natürlichen Ilmenit ein titanhaltiges Zuschlagstoffgemisch vorgesehen, das aus Rückständen der Titandioxid-Herstellung und einem oder mehreren der Bestandteile, ausgewählt aus Kohle, kohlehaltigen Rückständen, Eisen, Eisenoxid, eisen-oder eisenoxidhaltigen Rückständen, besteht ; aus der genannten Mischung, die mit Zement und Wasser versetzt wurde, wurden Briketts gepreßt, die bei 1000°C thermisch behandelt wurden und als Zusatz zu einer Metallschmelze verwendbar sind.

Gemäß EP-A-0 686 700 kann dieses Zuschlagstoffgemisch noch einen oder mehrere Bestandteile, ausgewählt aus Erdalkalimetalloxiden, Erdalkalimetallhydroxiden, erdalkalimetalloxid-oder erdalkalimetallhydroxidhaltigen Rückständen, Al₂O₃, Al(OH)₃, Al₂O₃- oder Al(OH)₃-haltigen Rückständen und SiO₂ oder SiO₂-haltigen Rückständen enthalten, um auf natürliche Schlackenbildner, die z. B. die Oxide CaO, Al₂O₃, SiO₂ und MgO₂ enthalten, verzichten zu können.

Die DE-C-4 318 126 befaßt sich mit einem Verfahren zur Herstellung von Titandioxid aus dem Rückstand der Titandioxid-Herstellung, bei der Ilmenit und/oder Schlacke mit Schwefelsäure aufgeschlossen werden und ein Rückstand mit Titandioxid-Gehalten von 20 bis 60 %, bezogen auf den Titandioxid-Feststoffgehalt, zurückbleibt. Dieser Rückstand wird mit einem oder mehreren Bestandteilen, ausgewählt aus Eisen, Eisenoxid und eisen- oder eisenoxidhaltigen Rückständen mit einem Eisengehalt von 30 bis 60 Gew.% gemischt, dieses Gemisch bei einer Temperatur von 1000 bis 1300°C thermisch behandelt, danach mit Schwefelsäure in einem Gewichtsverhältnis von TiO₂: H₂SO₄ von 1 : 1 bis 1 : 6 gemischt und auf eine Temperatur von 130 bis 280°C für die Dauer von 15 min. bis 22 Stunden erhitzt. Das Reaktionsprodukt wird aufgearbeitet und gelaugt. Dieses Verfahren ist umweltfreundlich, ermöglicht eine hohe Ausbeute an Titandioxid bei relativ geringem Energieverbrauch. Nach dem Wiederaufschluß verbleibt ein Rückstand, der einer Deponie oder einer anderen Verwertung zugeführt werden muß.

Aufgabe der vorliegenden Erfindung ist es, die eingangs angeführte Verwendung so zu gestalten, daß die Mischung mit relativ wenigen Schritten und mit relativ geringem Energieaufwand aus preiswerten Ausgangsmaterialien, z.B. Titandioxid-Ausschußmaterialien aus der Pigmentherstellung in umweltfreundlicher Weise herstellbar ist.

Gelöst ist diese Aufgabe dadurch, daß die eingangs genannte Mischung zu 20 bis 80 Gew.-% aus Titan und/oder. Titanverbindungen enthaltenden Rückständen und zu 20 bis 80 Gew.-% aus Eisen bzw.
Eisenverbindungen enthaltenden Rückständen, gegebenenfalls mit Zusätzen von Kohle oder rohlehaltigen Rückständen und Schwefel, besteht und die Mischung bei einer Temperatur von 200 bis 1300°C thermisch behandelt worden ist. Das auf diese Weise erzeugte titandioxidhaltige Reaktionsprodukt liegt pulverförmig mit einer Körnung von < 5 mm vor, so daß es problemlos in den Schmelzofen einblasbar ist und zur Erhöhung der Haltbarkeit der Ofenausmauerung beiträgt.

Für den Fall, daß als Eisenverbindung in den Rückständen auch Eisensulfat enthalten ist, werden im Rahmen der Ausgestaltung der Erfindung dem Gemisch noch Kohle bzw. kohlehaltige Rückstände und Schwefel zugesetzt, so daß Eisensulfat zu Eisenoxid reduziert wird.

Vorzugsweise beträgt die Temperatur zur Herstellung des titandioxidhaltigen Zusatzstoffs 250 bis 1100°C.

Titandioxidhaltige Rückstände entstehen bei der Herstellung von Titandioxid-Pigmenten aus einem Gemisch von Ilmenit und Schlacke, die z. B. nach dem Sulfatverfahren mit Schwefelsäure unter Bildung von Titanylsulfat gelaugt werden. Der dabei gebildete unlösliche Rückstand enthält noch 20 bis 65 Gew.% Titandioxid. Auch bei der Herstellung von Titandioxid-Pigmenten nach dem Chloridverfahren fallen titandioxidhaltige Rückstände an. Es können auch Titandioxid-Pigmente, die als Fehlchargen sowie als Titandioxid-Ausschußmaterialien anfallen, verwendet werden.

Als eisen- und eisenoxidhaltige Rückstände kommen insbesondere die bei der Dünnsäurerückgewinnung anfallenden Filtersalze (Eisensulfat), die bei der Herstellung von Schwefelsäure durch die Spaltung von Filtersalzen oder Schwefelkies anfallenden Abbrände (Eisen- (III)-oxid), oder Mischungen dieser Abbrände, der beim Walzen und Schmieden von Stahl sowie beim Ziehen von Draht anfallende Walzzunder sowie Eisenhydroxide in Betracht. Titandioxid ist auch in Katalysatoren enthalten, und als Titanverbindungen liegen TiOSO₄, TiCl₄ oder dergleichen vor.

Die Erfindung ist im folgenden anhand von zwei Ausführungsbeispielen näher erläutert:

### 1. Ausführungsbeispiel:

In einer Mischanlage werden:
40 Gew.% Rückstand der Titandioxid-Pigmentherstellung mit einem Feuchtigkeitsgehalt von 28 % und einem TiO₂-Gehalt von 50 Gew.%,
32 Gew.% Filtersalze aus der Dünnsäurerückgewinnung mit einem Feuchtigkeitsgehalt von 4,2 % und einem Fe₂SO₃-Gehalt von 38 Gew.% und einem TiO₂-Gehalt von 2,6 Gew.%,
5 Gew.% Abbrand aus der Schwefelsäureproduktion mit einem Fe₂O₃-Gehalt von 69 Gew.% und einem TiO₂-Gehalt von 8 Gew.%,
11 Gew.% Feinkohle,
12 Gew.% Schwefel
zu einem homogenen Gemisch verarbeitet.

Das Gemisch wird einem Ofen mit stationärer Wirbelschicht aufgegeben und bei einer Temperatur von ca. 1000°C thermisch behandelt. Das aus dem Wirbelschichtofen ausgetragene pulverförmige Produkt mit einer Körnung von 100% < 2 mm enthält als Hauptbestandteile 30 Gew.% Titanoxid und 24 Gew.% Eisen(III)-oxid, 22 Gew.% Siliziumoxid, 8 Gew.% Aluminiumoxid und 6 Gew.% Magnesiumoxid. Der Zusatz von Schwefel dient sowohl als Energiequelle als auch zur Einstellung der erforderlichen Schwefeldioxidkonzentration im Abgas. Das bei der thermischen Behandlung des Gemisches entstehende Schwefeldioxid wird aus dem Wirbelschichtofen abgezogen und zur Herstellung von Schwefelsäure benutzt.

Das Produkt wird als Zusatz für metallurgische Schmelzen zur Erhöhung der Haltbarkeit der Feuerfestausmauerung des Schmelzofens verwendet.

### 2. Ausführungsbeispiel:

In einer Mischanlage werden:
50 Gew.% Rückstand der Titandioxid-Pigmentherstellung mit einem Feuchtigkeitsgehalt von 1 Gew.% und einen TiO₂-Gehalt von 99 Gew.%,
50 Gew.% Abbrand aus der Schwefelsäureproduktion mit einem Feuchtigkeitsgehalt von 15 Gew.% und einen Fe₂O₃-Gehalt von 69 Gew.%
zu einer homogenen Mischung verarbeitet.

Das Gemisch wird in einem Drehrohrofen bei einer Temperatur von 280°C thermisch behandelt. Das aus dem Drehrohrofen ausgetragene pulverförmige Produkt besitzt eine Körnung von 100% < 2 mm und enthält als Hauptbestandteile ca. 50 Gew.% Titandioxid und 35 Gew.% Eisen (III)-oxid.

Das Produkt wird wie in Beispiel 1 verwendet.

## Patentansprüche

1. Verwendung einer 5 bis 90 Gew.%, vorzugsweise 10 bis 50 Gew.%, Titandioxid enthaltenden Mischung, die zu je 20 bis 80 Gew.-% aus Titan und/oder Titanverbindungen enthaltenden Rückständen und Eisen und/oder Eisenverbindungen enthaltenden Rückständen, gegebenenfalls mit Zusätzen von Kohle oder kohlehaltigen Rückständen und Schwefel, besteht und bei einer Temperatur von 200-1300°C thermisch behandelt worden ist als Zusatz für metallurgische Schmelzen, vorzugsweise für Schmelzen von Eisenwerkstoffen.

2. Verwendung nach Anspruch 1, dadurch gekennzeichnet, daß die Mischung in einen metallurgischen Schmelzofen eingeblasen wird.

3. Verwendung nach einem der Ansprüche 1 und 2, dadurch gekennzeichnet, daß die Mischung bei Temperaturen von 250 bis 1100°C thermisch behandelt worden ist.

4. Verwendung nach einem der Ansprüche 1 bis 3, dadurch gekennzeichnet, daß die Mischung in einem Ofen mit stationärer oder zirkulierender Wirbelschicht thermisch behandelt worden ist.

5. Verwendung nach einem der Ansprüche 1 bis 3, dadurch gekennzeichnet, daß die Mischung in einem Drehrohrofen thermisch behandelt worden ist.

## Claims

1. Use of a mixture containing 5 to 90% by weight, preferably 10 to 50% by weight, titanium dioxide, as additive for metallurgical melts, preferably for melts of ferrous products, the mixture containing in each case 20 to 80% by weight of residues containing titanium and/or titanium compounds and residues containing iron and/or iron compounds, optionally with additives of carbon or carbon-containing residues and sulphur, and having been thermally treated at a temperature of 200 - 1300°C.

2. Use according to claim 1, characterized in that the mixture is injected into a metallurgical melting furnace.

3. Use according to one of claims 1 and 2, characterized in that the mixture has been thermally treated at temperatures of 250 to 1100°C.

4. Use according to one of claims 1 to 3, characterized in that the mixture has been thermally treated in a furnace with stationary or circulating fluid bed.

5. Use according to one of claims 1 to 3, characterized in that the mixture has been thermally treated in a revolving cylindrical furnace.

## Revendications

1. Utilisation d'un mélange contenant de 5 à 90 % en poids, de préférence de 10 à 50 % en poids de dioxyde de titane, lequel mélange contient de 20 à 80 % de résidus à base de titane et/ou de composés de titane et de 20 à 80 % de résidus à base de fer et/ou de composés de fer, et éventuellement en plus du charbon ou des résidus contenant du charbon ainsi que du soufre, et a subi un traitement thermique à une température comprise entre 200 et 1300 °C, en tant qu'additif pour la fusion métallurgique, de préférence pour la fusion de matériaux à base de fer.

2. Utilisation selon la revendication 1, caratérisé par le fait que le mélange contenant du charbon ou des résidus à base de charbone ainsi du soufre est insufflé dans un four de fusion métallurgique.

3. Utilisation selon une des revendications 1 et 2, caractérisée par le fait que le mélange a subi un traitement thermique à une température comprise entre 250 et 1100 °C.

4. Utilisation selon une des revendications 1 à 3, caractérisée par le fait que le mélange a été traité dans un four à couche turbulente stationnaire ou circulante.

5. Utilisation selon une des revendications 1 à 3, caractérisée par le fait que le mélange a subi un traitement thermique dans un four tubulaire tournant.
